# EUROPÄISCHE PATENTSCHRIFT

(11) **EP 0 757 529 B1**
(45) Veröffentlichungstag und Bekanntmachung des Hinweises auf die Patenterteilung: **28.06.2000**
(21) Anmeldenummer: 95919365.7
(22) Anmeldetag: 28.04.1995
(51) Int. Cl.: A47J 27/62, A47J 36/16, G05D 23/19, A47J 27/14, A47J 43/046

(54) **KÜCHENMASCHINE MIT EINEM RÜHRGEFÄSS UND EINEM ANTRIEB FÜR EIN RÜHRWERK IN DEM RÜHRGEFÄSS**
FOOD PROCESSOR WITH A MIXING VESSEL AND A DRIVE MECHANISM FOR AN AGITATOR IN THE MIXING VESSEL
ROBOT MENAGER COMPORTANT UN BAC A AGITATION ET UN MECANISME D'ENTRAINEMENT DE L'AGITATEUR DU BAC

(30) Priorität: 28.04.1994 DE 4414825
(43) Veröffentlichungstag der Anmeldung: 12.02.1997
(60) Teilanmeldung: 99118360.9
(73) Patentinhaber: VORWERK & CO. INTERHOLDING GmbH, 42275 Wuppertal (DE)
(72) Erfinder: LAMPING, Andreas, 42657 Solingen (DE); HERRMANN, Thomas, 45772 Marl (DE); CHOLEWA, Lothar, 44627 Herne (DE); MESLI, Richard, 58332 Schwelm (DE); GARN, Dieter, 58322 Schwelm (DE); PUCHALLA, Willy, 42387 Wuppertal (DE)
(74) Vertreter: Müller, Enno, Dipl.-Ing.
(86) Internationale Anmeldenummer: EP9501637
(87) Internationale Veröffentlichungsnummer: WO9529614

(56) Entgegenhaltungen:
- EP-A- 0 172 576
- EP-A- 0 497 546
- EP-A- 0 514 212
- WO-A-91/02483
- DE-A- 3 507 276
- GB-A- 1 544 035
- US-A- 4 323 110
- US-A- 5 076 153
- PATENT ABSTRACTS OF JAPAN vol. 016 no. 431 (C-0983) ,9.September 1992 & JP,A,04 148635 (TAISHIYOU DENKI HANBAI KK) 21.Mai 1992,

## Beschreibung

Die Erfindung betrifft eine Küchenmaschine mit einem Rührgefäß und einem Antrieb für ein Rührwerk in dem Rührgefäß, wobei das Rührgefäß in seinem unteren Bereich aufheizbar ist.

Es sind Küchenmaschinen bekannt, bei welchen eine Aufheizung eines Rührgefäßes über einen Ist/Soll-Wertevergleich kontrolliert wird. Die mittels eines Schalters, insbesondere eines Potentiometers, voreingestellte, gewünschte Temperatur wird ständig mit der momentanen Ist-Temperatur verglichen. Die Leistungsaufnahme der Heizung wird entsprechend geregelt. Entspricht der beispielsweise über einen Sensor abgegriffene Ist-Wert dem voreingestellten Soll-Wert, so erfolgt eine Unterbrechung der Leistungsaufnahme. Aus der DE-OS 35 07 276 ist eine Küchenmaschine bekannt, bei welcher ein Fühlerkopf als Bimetallschalter vorgesehen ist. Dieser bewirkt bei oder nach Erreichen des Kochpunktes des Mediums ein Abschalten der Heizung.

In der EP-A1 0 497 546 wird eine Heizvorrichtung zum Aufheizen von Speisen beschrieben, bei der ein Mikrocomputer aus dem im Garraum ermittelten Temperaturanstieg die Menge der darin befindlichen Speisen bestimmt und bei welcher eine Steuerung der Heizdauer in Abhängigkeit von dem Temperaturanstieg erfolgt. Erreicht die ermittelte Temperaturanstiegsgeschwindigkeit beispielsweise einen festgelegten Vorgabewert oder überschreitet diesen, so wird die Heizdauer - bei konstanter Leistungsaufnahme des Heizelementes - entsprechend auf einen niedrigeren Wert heruntergeregelt. Im einzelnen wird vorgeschlagen, daß der Temperaturanstieg im Garraum über eine Messung der Lufttemperatur erfolgen soll. Bei der bekannten Heizvorrichtung besteht somit aufgrund der Regelung der Heizdauer bei konstanter Leistungsaufnahme des Heizelementes die Problematik einer stoßweisen Wärmezufuhr zu den zu garenden Lebensmitteln. Besonders bei empfindlichen Lebensmitteln, wie beispielsweise Gemüse, ist dies mit dem Nachteil verbunden, daß diese auch bei kurzzeitiger, zu hoher Wärmebeaufschlagung unter anderem an Aroma verlieren.

Aufgabe der vorliegenden Erfindung ist es, eine gattungsgemäße Küchenmaschine in vorteilhafter Weise weiterzubilden.

Gelöst ist dies durch die im Hauptanspruch angegebene Erfindung.

Die Unteransprüche stellen vorteilhafte Weiterbildungen dar.

Erfindungsgemäß ist es vorgesehen, daß die Aufheizung in Abhängigkeit einer Temperaturanstiegsgeschwindigkeit vorgenommen wird. Die gewünschte Temperatur wird bevorzugt in bekannter Weise über ein lineares Potentiometer eingestellt und als Spannungswert einem Regelkreis als Soll-Wert zugeführt. Hierbei kann eine Umwandlung des Spannungswertes in einen Soll-Wert beispielsweise über einen Analog/Digital wandler eines integrierten Schaltkreises erfolgen. Ein vorzugsweise außen an dem Topfboden des Rührgefäßes angeordneter, beziehungsweise diesen beaufschlagender Temperatursensor mißt die aktuelle Temperatur und führt diesen als Ist-Wert dem Regelkreis zu. Es ist somit ein äußerer Temperaturregelkreis geschlossen. Gleichzeitig wird während des Aufheizvorganges die Temperaturanstiegsgeschwindigkeit berechnet, um damit ebenfalls die Heizenergie zu beeinflussen. Im Gegensatz zu der bekannten linearen Leistungsaufnahme der Heizung, bewirkt die erfindungsgemäße Ausgestaltung eine Anpassung der Leistungsaufnahme in Abhängigkeit von der Temperaturanstiegsgeschwindigkeit. Wird beispielsweise eine relativ geringe Temperaturanstiegsgeschwindigkeit ermittelt, so wird über einen integrierten Schaltkreis oder dergleichen ein optimaler Leistungsaufnahmewert berechnet, welcher hier relativ groß ist. Die relativ geringe Temperaturanstiegsgeschwindigkeit läßt auf ein schwer aufheizbares Medium innerhalb des Rührgefäßes schließen, womit zum Aufheizen dieses Mediums entsprechend mehr Energie zugeführt werden muß. Ist jedoch ein wasserähnliches Medium vorhanden, so bedingt dies eine relativ hohe Temperaturanstiegsgeschwindigkeit. Dementsprechend wird ein relativ geringer Leistungsaufnahmewert berechnet. Als besonders vorteilhaft erweist es sich hierbei, daß die Aufheizung in Abhängigkeit einer Füllmengenermittlung durchgeführt wird. Bedingt durch diese Ausgestaltung ist eine optimale Auslegung der Leistungsaufnahme der Heizung gewährleistet. Letztere wird in Abhängigkeit von Füllmenge, Temperaturanstiegsgeschwindigkeit und Soll/Ist-Wertevergleich geregelt. Diese Regelung wird dadurch optimiert, daß die Füllmengenermittlung durch die Temperaturanstiegsgeschwindigkeit bei einer bestimmten Heizleistung mit empirisch bei verschiedenen Füllungen ermittelten Temperaturanstiegswerten durchgeführt wird. Es wird hierbei vorgeschlagen, die Füllmengenermittlung etwa in der zweiten Minute nach Einschalten des Aufheizvorganges durchzuführen, um die Totzeit/Trägheit des Heizsystems zu überbrücken. Das Verhältnis von zugeführter Heizenergie zur Temperatursteigung läßt einen Rückschluß auf die Füllmenge zu. Die ermittelten Vergleichswerte werden mit empirisch bei verschiedenen Füllungen ermittelten Werten verglichen. Entsprechend den Vergleichswerten wird die Leistungsaufnahme geregelt. Es ist vorgesehen, daß die Füllmengenermittlung weiter in Abhängigkeit der gewählten Drehzahl des Rührwerkes durchgeführt wird. Bei verschiedenen Drehzahlen des Rührwerkes ergeben sich bei gleichem Medium unterschiedliche Wärmeübergangswiderstände. Bedingt durch die vorgeschlagene Ausbildung wird die Drehzahl des Rührwerkes mit in die Füllmengenermittlung einbezogen. Mit der ermittelten Füllmenge in Verbindung mit der aktuellen Drehzahl des Rührwerkes werden aus einem empirisch ermittelten Kennlinienfeld Werte entnommen, mit denen die Heizenergie beeinflußt wird. Letztere ist somit füllmengenabhängig. Die empirisch ermittelten Werte basieren auf verschiedenen Temperaturanstiegswerten bei verschiedenen, üblichen Füllungen des Rührtopfes, wobei hier Toleranzen gegeben sind. Bevorzugt wird hierbei eine Ausbildung, bei der ein nicht flüchtiger Speicher vorgesehen ist, in welchem die empirisch ermittelten Werte gespeichert sind. Letzterer kann innerhalb eines integrierten Schaltkreises vorgesehen sein. Die Regelung der Leistungsaufnahme ist in vorteilhafter Weise noch dadurch verbessert, daß Proportionalitätsfaktoren, welche die Aufheizung steuern, je nach gewünschter Endtemperatur unterschiedlich gewählt sind. So kann die Heizung beispielsweise soll-wertabhängig angesteuert werden, d.h. beispielsweise bei Vorgaben von 40°C bis 60°C mit einer geringeren Energie als bei Vorgaben von über 60°C. Weiterhin wird vorgeschlagen, daß die Aufheizung durch eine elektrische Widerstandsheizung erfolgt und daß die hierfür erforderliche Energieaufnahme jeweils in einem der Heizleistung angepaßtem Zeitintervall von beispielsweise 15 Sekunden geregelt ist. Die Leistungsaufnahme wird dadurch beeinflußt, daß innerhalb eines, beispielsweise mittels eines Sägezahn-Generators gebildeten Zeitfensters von 15 Sekunden die Ansteuerdauer der Heizung variiert wird. Ist beispielsweise eine volle Leistungsaufnahme erforderlich, so entspricht die Ansteuerdauer der Heizung dem Zeitintervall, bzw. der des Zeitfenster. Ist jedoch eine geringere Leistungsaufnahme erforderlich, so kann beispielsweise die Ansteuerdauer der Heizung 5 Sekunden betragen. In den bei einem Zeitintervall von 15 Sekunden verbleibenden restlichen 10 Sekunden ist die Leistungsaufnahme der Heizung unterbrochen. Bedingt durch die zuvor beschriebenen Ausgestaltungen ergibt sich eine optimale Regelung der Leistungsaufnahme der Heizung in Abhängigkeit von Temperaturanstiegsgeschwindigkeit, Füllmenge und Drehzahl des Rührwerkes.

Weiterhin wird vorgeschlagen, daß eine Rührwerk-Einstellung (Teigrührschaltung vorgesehen ist, in welcher Rührphasen durch regelmäßige Stillstände unterbrochen sind. Diese Teigrührschaltung kann mittels des Einstellschalters für die Drehzahl des Rührwerkes geschaltet werden, wobei hier eine Ausgestaltung bevorzugt wird, bei der eine Einstellung in die Teigrührschaltung von einer Nullstellung ausgehend in Gegenuhrzeigerrichtung und eine übliche Einstellung des Rührwerkes in Uhrzeigerrichtung erfolgt. Somit ist gewährleistet, daß eine Umschaltung von der Teigrührschaltung in eine Normalschaltung, d. h. eine Einstellung einer konstanten Drehzahl des Rührwerkes, nur mit einem Überfahren der Nullstellung erfolgen kann. Diese Teigrührschaltung zeichnet sich durch von Ruhephasen unterbrochenen Rührphasen aus ("Stop and go"). In einer Weiterbildung des Erfindungsgegenstandes ist vorgesehen, daß unter Nutzung eines Rührgutwiderstandes bei einer Reduzierung der sich an sich aus der Leistungsaufnahme ergebenden maximalen Drehzahl auf ein Drittel oder weniger Ruhepausen zwischengeschaltet sind und daß die Ruhepausen zur aktiven Kühlung des Antriebsmotors genutzt sind. Als Antrieb dient hierbei ein Universalmotor oder Reihenschlußmotor. Die Antriebseinheit muß sowohl die Anforderungen für die hohen Drehzahlen erfüllen als auch ein hohes Drehmoment für starke Belastungen aufbringen. Bekannt sind hierbei Lösungen, bei welchen ausreichend starke Motoren mit Direktantrieb eingesetzt werden, deren Kenndaten so ausgelegt sind, daß die geforderten Bedingungen hinsichtlich Drehzahl und Drehmoment erfüllt werden, ohne dabei die jeweils vorgeschriebenen thermischen Grenzwerte zu überschreiten. Nachteilig an dieser Ausgestaltung ist, daß der Motor für den größten Anwendungsbereich überdimensioniert ausgebildet ist, was auch zu einer Vergrößerung des Volumens und einer Zunahme des Gewichtes des Motors zur Folge hat. Zur Kühlung derartiger Motoren werden an sich bekannte Kühllüfter vorgesehen. Hier ist bspw. die EP-PS 0 513 483 zu erwähnen. Weiter sind Ausgestaltungen bekannt, bei welchen zwischen Motor und Abtrieb Getriebe mit festem Übersetzungsverhältnis oder mit verschiedenen Getriebestufen vorgesehen sind. Ein derartiges Getriebe ist mit einer entsprechenden Übersetzung ausgelegt zur Einhaltung der für die einzelnen Komponenten beim jeweiligen Einsatz des Gerätes vorgeschriebenen thermischen Grenzwerte. Der Einsatz von Getriebe bringt einen erhöhten technischen und mechanischen Aufwand mit sich. Das Getriebe muß entsprechend den gestellten Anforderungen bei einem hohen Drehmoment kraftschlüssig und für hohe Drehzahlen sicher gegen Fliehkrafteinflüsse ausgelegt sein. Die durch ein Getriebe entstehenden Reibungsverluste verringern den Wirkungsgrad der gesamten Antriebseinheit. Beim Erfindungsgegenstand ist die Antriebseinheit derart gebildet, daß diese aus einem Motor und einem Getriebe mit fester Übersetzung besteht, wobei der Motor mit entsprechender Ansteuerung, die über die Kenndaten des Motors und des Übersetzungsverhältnisses so ausgelegt ist, daß der gesamte geforderte Drehzahlbereich bei einer Grund-bzw. Normallast, wie sie bei dem überwiegenden Einsatz des Gerätes vorliegt, elektronisch geregelt durchfahren wird und bei einer für die Geräteanwendung maximal vorgegebnen Belastung (bspw. Teigrührschaltung), die weniger oft zum Einsatz kommt, der Motor ungeregelt angesteuert wird und dabei die notwendige Abgabeleistung zur Verrichtung der geforderten Arbeit aufbringt. Die für einen Einsatz der Antriebseinheit vorgeschriebenen thermischen Grenzwerte werden eingehalten. In Einzelheit wird hierzu vorgeschlagen, daß ein stehender Universalmotor (Reihenschlußmotor) über einen Riemen das parallel zum Motor angeordnete Rührwerk antreibt. Der Motor wird mit Netzspannung versorgt und über einen Triac angesteuert. Der Antriebsmotor hat auf seiner Welle keinen Kühllüfter. Vielmehr ist zur Kühlung des Antriebsmotors ein externer elektrischer Gebläsemotor vorgesehen. Bei einer Grund- bzw. Normallast wird der Motor innerhalb seiner Kennlinie durch Phasenanschnitt auf die geforderten Drehzahlen geregelt. Die Verluste der Leistungsabgabe besonders bei hohen Drehzahlen werden durch Wegfall eines Kühllüfters auf der Motorwelle reduziert. Für die notwendige Kühlung sorgt das externe Kühlgebläse, wobei die Luftleistung der Wärmeentwicklung im Motor, gemessen von einem Temperaturfühler im Motor, durch elektronische Regelung angepaßt wird. Die Luftleistung ist bei einer Grundlast für jede Drehzahl angepaßt, die Werte stammen aus empirischen Ermittlungen. Bei erhöhter Last muß zum Erreichen der Solldrehzahl die Motorspannung durch entsprechendes Ansteuern des Triacs erhöht werden. Diese Erhöhung wird als Abweichung zur Spannung bei Grundlast ausgewertet und kann indirekt als Lasterhöhung gedeutet werden. Je größer die Abweichung ist, desto stärker ist die Last und damit auch die Motorerwärmung. Dementsprechend wird dann die Luftleistung durch Ansteuern des Lüftermotors erhöht. Bei hohen Belastungen, wie sie z. B. bei einer Hefeteigzubereitung auftreten, steigt die Motortemperatur aufgrund der erhöhten Verluste in den Kupferwicklungen über den vorgeschriebenen Grenzwert hinaus an. Hierbei wird die an sich maximale Drehzahl von bspw. 11.500 U/min auf eine Drehzahl von 100 bis 3.000, im Mittel ca. 500 U/min reduziert. Die Antriebseinheit, bestehend aus Motor und Getriebe, ist dabei so ausgelegt, daß bei der für den Einsatz des Gerätes maximal vorgesehenen Belastung eine ausreichende Drehbewegung zur Umwälzung bei Herstellung von Teigen oder ähnlichen gewährleistet ist. Das externe Gebläse erzeugt während dieser Betriebsart die maximale Luftleistung, die jedoch allein nicht ausreicht um den Motor unter den für den Einsatz vorgeschriebenen Grenzwert der Temperatur herab zu kühlen. Zusätzlich wird der Motor bei den hohen Belastungen nur mit Impulsen angesteuert, wobei die volle Netzspannung gehalten wird und sich eine der Belastung entsprechende Drehzahl einstellt. Die Dauer (Pulsbreite) des Ansteuerimpulses muß dabei ausreichen, um bei der für den Einsatz des Gerätes maximal vorgesehenen Belastung die notwendige Arbeit zu verrichten. Das Verhältnis der Pulsbreite des Ansteuerimpulses für den Motor zur jeweils nachfolgenden Aus-Zeit ist so festgelegt, daß bei maximaler Luftleistung des externen Kühlgebläses und bei der maximal vorgesehenen Belastung für eine bestimmte Dauer die für den Einsatz des Gerätes vorgeschriebene Grenztemperatur der Motorwicklungen nicht überschritten wird. Aufgrund der Charakteristik eines Universalmotors (Reihenschlußmotors) läuft der Motor bei einem Impulsbetrieb mit jedem Einschaltvorgang mit dem maximal zur Verfügung stehenden Drehmoment aus dem Stillstand an und verursacht so einen für bestimmte Anwendungen nützlichen Losreißeffekt. Bei der Herstellung von Hefeteig oder ähnlichem trägt der Impulsbetrieb durch Losrütteln von Teigbestandteilen zu einer Verbesserung der Rückführung des Teiggemisches in den Arbeitsbereich des Knetwerkzeuges im Rührtopf bei. Es wird hierbei bevorzugt, daß die Stillstände sich im Vergleich zu den Rührphasen über eine vielfache Zeitspanne erstrecken. Die Ruhephase, die bevorzugt etwa dreifach so lang ist wie die Rührphase, beispielsweise ca. 4,5 Sekunden im Vergleich zu 1,5 Sekunden, ist auch dahingehend vorteilhaft, daß sie zur Motorkühlung genutzt werden kann. Es sind Verhältnisse von Ruhephase zu Rührphase im Bereich von 1:1 bis 6:1 denkbar. In der Rührphase lassen sich daher kurzfristig sehr hohe Leistungen realisieren. Die beschriebene Ausgestaltung ist weiterhin dahingehend optimiert, daß die Teigrührschaltung nur aktivierbar ist, wenn die Aufheiztemperatur unterhalb einer bestimmten Grenztemperatur, beispielsweise 70°C voreingestellt ist. Diese Sicherheitsfunktion ist auch bei einer sogenannten Turbofunktion, bei welcher kurzfristig sehr hohe Drehzahlen erzielt werden, denkbar. Die Abhängigkeit von einer bestimmten Grenztemperatur hat insbesondere den Hintergrund, daß bei Temperaturen von mehr als 70°C bereits örtliche Siedeerscheinungen auftreten können, die durch die Rührfunktion verstärkt werden (Siedeverzug). Dies kann bei sehr hohen Drehzahlen, welche sowohl bei einer Teigrührschaltung als auch bei einer Turboschaltung erzielt werden können, dann dazu führen, daß sich ein sehr starker Druck aufbaut, welcher zu einem Abheben eines auf dem Rührgefäß angeordneten Deckels führen kann. Weiterhin erweist es sich als vorteilhaft, daß abhängig von einer voreingestellten Drehzahl des Rührwerkes ein Hochfahren des Rührwerkes auf diese Drehzahl zunächst langsam und dann schneller erfolgt. Hier kann beispielsweise die Ausbildung so gewählt sein, daß bei einer Drehzahl des Rührwerkes bis etwa 1000 Umdrehungen pro Minute stets ein langsames Anfahren erfolgt. Bei größeren eingestellten Drehzahlen, oberhalb etwa 1000 Umdrehungen pro Minute, erfolgt ein ruckartiges Anfahren. Hierzu wird vorgeschlagen, daß bei einer Voreinstellung der Heizung auf eine Temperatur von mehr als 70°C auch bei einer Einstellung von mehr als 1000 Umdrehungen pro Minute ein langsames Anfahren erfolgt, wobei die Drehzahl gleichwohl 1000 Umdrehungen pro Minute nicht überschreitet. Die Drehzahlveränderung des Motors bei normalem Betrieb, d.h. bei konstanter Drehzahl des Rührwerkes, erfolgt bevorzugt ohne Getriebe. Vielmehr wird die Veränderung mittels Steuerung über den Phasenanschnittswinkel vorgenommen. Hohe Drehzahlen von mehr als 1.000 U/min werden bei den meisten Anwendungen zum Zerkleinern des Topfinhaltes eingestellt. Man benötigt hierbei das maximale Drehmoment des Motors, um beim Anlaufen ein Verkeilen des Mixwerkzeuges in dem Medium zu vermeiden. Der zur Verfügung stehende Antriebsmotor kann das maximale Moment nur bei maximaler Versorgungsspannung aufbringen, d. h. ohne Phasenanschnitt starten und dann auf die Solldrehzahl regeln. Niedrigere Drehzahlen von weniger als 1.000 U/min werden überwiegend im Kochbetrieb zum Rühren verwendet. Hier muß ein Zerkleinern des Topfinhaltes vermieden werden, in dem der Motor mit geringerer Versorgungsspannung (maximaler Phasenanschnitt) gestartet und dann auf die Solldrehzahl geregelt wird. Die Drehzahlregelung wird über einen Mikroprozessor programmtechnisch realisiert. Die Sollwertvorgabe erfolgt stufenlos über einen Potentiometer, die Rückmeldung über den jeweiligen Istwert erfolgt durch einen Sensor, der die Drehbewegungen des Motors an der Motorwelle abgreift. Die Auslegung der den Regelkreis bestimmenden Komponenten muß dabei so geartet sein, daß ein Regelbereich von mindestens 1:100 erreicht wird, d. h. Drehzahlen von z. B. 100 bis ca. 10.000 U/min am Mixwerkzeug.

Weiterhin wird vorgeschlagen, daß die Drehzahlvorwahl und/oder die Temperaturvorwahl über beleuchtete Schalter, beispielsweise Dreh- oder Schiebeschalter erfolgt. Auch derartig ausgebildete Küchenmaschinen sind bekannt. Hier wird zur Erzielung einer verbesserten Handhabung vorgeschlagen, daß höheren Einstellwerten eine Beleuchtung anderer Farbe und/oder Intensität zugeordnet ist als niedrigeren Einstellwerten. Dies kann beispielsweise dadurch gelöst sein, daß LED-Anzeigen für Temperatur und/oder Drehzahl zweifarbig ausgebildet sind, beispielsweise gelb und rot. Licht emittierende Komponenten wie z. B. LED's speisen Licht von entgegengesetzten Richtungen in einen Lichtleiter ein. Der Lichtleiter ist dabei so ausgelegt, daß Licht senkrecht zur Richtung der Einspeisung abgestrahlt wird und so der Effekt eines Lichtbalkens entsteht. Je nach Ansteuerung der Einspeisekomponenten (LED's) kann so entweder die Intensität von einer Seite des Lichtbalkens zur anderen verlagert werden und erhöht werden (bei gleichfarbigen Einspeisekomponenten) oder bei farblich unterschiedlichen Einspeisekomponenten ein Effekt fließender Veränderung von der Farbe der einen Einspeisekomponente über Mischlicht bis hin zur Farbe der anderen Einspeisekomponente erzielt werden. Für die Drehzahl kann bei zweifach einfarbiger Einspeisung einer niedrigen Drehzahl eine entsprechende Intensität zugeordnet und anzeigt und bei Erhöhung der Drehzahleinstellung die Intensität zum anderen Ende des Lichtbalkens hin verlagert oder erhöht werden. Während bei niedrigeren Einstellbereichen die gelben LED's stark aktiviert sind, die roten dagegen nur schwach, erfolgt mit zunehmend höheren Einstellungen eine Abschwächung der Aktivierung der gelben und eine Verstärkung der Aktivierung der roten LED's. Die beleuchteten Skalenfelder um die Schalter (Potentiometer) besitzen somit eine Signalfunktion für den Benutzer, insbesondere bei höheren Einstellwerten.

Es ist des weiteren vorgeschlagen, daß bei Küchenmaschinen mit einem Rührgefäß und einem Antrieb für ein Rührwerk in dem Rührgefäß, wobei das Rührgefäß in seinem unteren Bereich aufheizbar ist und ein Drehschalter, insbesondere für eine eingebaute, elektronische Uhr, beispielsweise zur Vorwahl einer Heizzeit, vorgesehen ist, den Drehschalter derart auszubilden, daß durch eine hohe Drehgeschwindigkeit des Drehschalters über einen bestimmten Drehwinkel eine große Zeiteinheit, beispielsweise eine Minute, und durch eine niedrigere Drehgeschwindigkeit des Drehschalters über denselben Drehwinkel eine niedrige Zeiteinheit, beispielsweise eine Sekunde, zuordbar ist. In Abhängigkeit von der Drehgeschwindigkeit eines derartigen Dreh-Stellknopfes über denselben Drehwinkel ist eine Verstellung der Uhr in kleinen wie auch in großen Schritten möglich, ohne jeweils den gesamten Einstellbereich durchfahren zu müssen.

Weiter wird vorgeschlagen, daß bezüglich der elektrischen/elektronischen und/oder mechanischen Komponenten Abfrageschleifen vorgesehen sind, die zur Abfragung in einem Sammelstecker zusammengeführt sind. Dieser Sammelstecker kann auch als Schnittstelle für externe Anschlüsse ausgelegt sein. Mittels dieses Sammelsteckers bzw. dieser Schnittstelle können über Abfrageschleifen Meldungen, auch Fehlermeldungen, des Motors, der Heizung, der Uhr, einer eventuell vorgesehenen Waage usw. abgefragt werden, bspw. als Service-Hilfe. Hier können z.B. Funktionsausfälle in den Hauptkomponenten wie Motor oder Heizung oder in anderen elektrischen Elementen erfaßt werden, welche Rückschlüsse auf eventuelle Fehler zulassen. Eine derartige Schnittstelle kann weiterhin dazu genutzt sein, daß ein Teil einer Kalibrierschaltung bzgl. jeder Abfrageschleife einer elektrischen/elektronischen Komponente der Küchenmaschine in einem herausnehmbaren/steckbaren Zusatzteil ausgebildet ist. Es besteht somit die Möglichkeit über diese Schnittstelle nach der Gerätefertigung gerätespezifische Werte einzustellen bzw. zu kalibrieren. Auf diese Weise kann auf aufwendige elektrische/mechanische Justiervorgänge und entsprechende elektrische/mechanische Bauelemente verzichtet werden. Die jeweiligen, gerätespezifischen Werte werden dabei in einem nicht flüchtigen Speicher (EEPROM) in der Elektronik des Gerätes gespeichert und können im Servicefall geändert werden. Bspw. kann bei einer derartigen Kalibrierung die Waageneinrichtung justiert werden und die Soll-Drehzahlen mit den Ist-Drehzahlen des Rührwerkes verglichen werden. Entsprechende Abweichungen könnten in dem nicht flüchtigen Speicher abgelegt werden. Hierzu ist weiterhin denkbar, daß das Steckerteil hinsichtlich der Kalibrierungswerte ebenfalls programmierbar ist. Das Steckerteil kann bspw. in Form eines Dongles ausgebildet sein, welcher werkseitig programmiert ist. Mit Hilfe dieses Steckerteiles, welches auf die Schnittstelle der Küchenmaschine gesetzt werden kann, werden Kalibrierungen vorgenommen und ggf. Voreinstellungen, bspw. der Waage, der Drehzahlen usw., geändert. Es kann hierbei vorgesehen sein, daß die Kalibrierung mittels des Steckerteiles in mehreren Schritten erfolgt, wobei jeder Schritt bspw. in einem Uhrzeit-Display angezeigt wird. Weiter kann bspw. in dem Gewichts-Display die jeweiligen Einstellungswerte angezeigt werden. Es wird vorgeschlagen, daß bspw. in dem Gewichts-Display die Versionsnummer des Steckerteiles, insbesondere des Dongles angezeigt wird. Sollte die Küchenmaschine bereits vorher mit einer älteren Dongle-Version kalibriert worden sein, wird vorgeschlagen, daß die angezeigte, alte Versionsnummer blinkt. Hier ist weiterhin von Bedeutung, daß der Sammelstecker als Schnittstelle für einen Computer ausgebildet ist. Die ermittelten bzw. abgefragten Werte der elektrischen und/oder mechanischen Komponenten können somit mit einer entsprechenden Computer-Software verwertet werden. Hier ist es beispielsweise denkbar, Meßwerte von Prüfschleifen mit computerseitig gespeicherten Soll-Werten zu vergleichen, um eine eventuelle Fehleridentifikation zu ermöglichen. Weiterhin ist bedingt durch diese Ausgestaltung auch denkbar, die aktuelle Temperatur, insbesondere die Rührguttemperatur, die aktuelle Drehzahl des Rührwerkes, die Rührzeit und ein eventuell erfaßtes Füllmengengewicht computerseitig zu erfassen und abzuspeichern. Somit kann auch nach einer Herstellung von Speisen wie Soßen, Suppen oder dergleichen mittels der Küchenmaschine das Herstellungsverfahren, insbesondere die Einstellungen und Dauer der zuvor genannten Konponenten, nachvollzogen werden. Dies ist insbesondere zur Herstellung von Rezepturen besonders vorteilhaft. Schließlich kann eine derartige Schnittstelle für einen Computer auch dahingehend genutzt werden, daß die Komponenten oder die Schnittstelle ansteuerbar sind, beispielsweise die Drehzahl des Rührwerkes vorwählbar oder die Aufheiztemperatur der Heizung einstellbar ist. Es ist somit eine Möglichkeit gegeben, die Küchenmaschine computergesteuert zu nutzen. So kann beispielsweise mit einer computerseitig abgespeicherten Rezeptur die Drehzahl des Rührwerkes und die Aufheiztemperatur der Heizung mittels des Computers eingestellt werden. Weiterhin ist durch diese Ausgestaltung denkbar, daß in Abhängigkeit von den übermittelten Daten dem Benutzer per Computer-Bildschirm Hinweise für den Ablauf einer Speisenzubereitung gegeben werden können.

Die Erfindung ist nachstehend anhand eines zeichnerisch veranschaulichten Ausführungsbeispieles näher erläutert. Es zeigt:
- Fig. 1: eine erfindungsgemäße Küchenmaschine mit einem Rührgefäß in einer Seitenansicht,
- Fig. 2: die Küchenmaschine gemäß Figur 1 in Vorderansicht,
- Fig. 3: die Küchenmaschine in Draufsicht, jedoch nach Abnahme des Rührgefäßes,
- Fig. 4: die Unteransicht des Rührgefäßes,
- Fig. 5: eine Ausschnittsvergrößerung des Bereiches V in Figur 1, in Schnittdarstellung,
- Fig. 6: ein Blockschaltbild einer Heizungssteuerung der Küchenmaschine,
- Fig. 7: ein Diagramm zur Darstellung einer Temperatursteigung in Abhängigkeit zur Zeit, bezüglich der Heizungssteuerung,
- Fig. 8: ein weiteres Diagramm zur Darstellung der Leistungsaufnahme in Abhängigkeit zur Zeit, in Bezug auf das Diagramm in Figur 7 und
- Fig. 9: eine schematische Darstellung eines Rührwerkantriebes mit einer Kühlung.

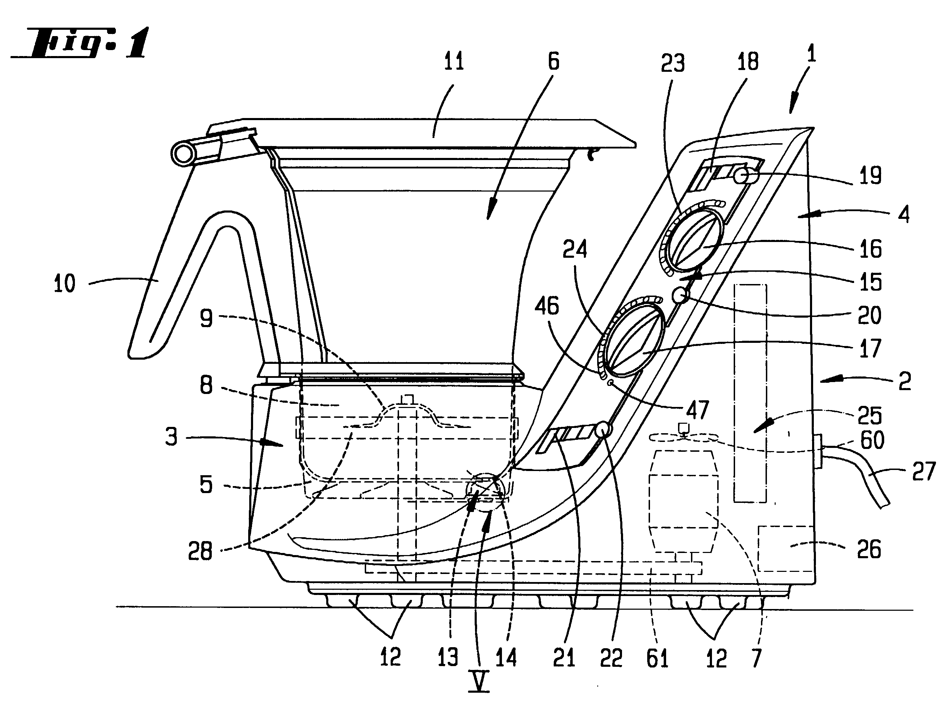

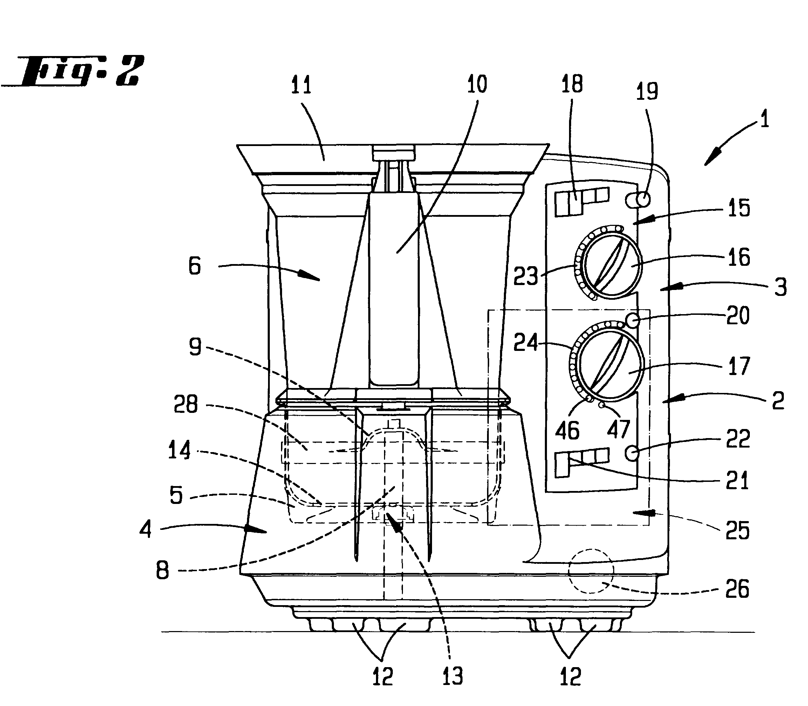

Die in Figur 1 dargestellte Küchenmaschine 1 besitzt ein Gehäuse 2, welches sich im wesentlichen aus zwei Bereichen zusammensetzt. Der erste, niedrigere Bereich ist ein Rührgefäß-Aufnahmebereich 3, von welchem ausgehend sich ein in einem Winkel von ca. 60 Grad zur Horizontalen nach oben hin erstreckender Bediener- und Elektronikbereich 4 erstreckt.

Der Rührgefäß-Aufnahmebereich 3 weist eine kreisrunde Aufnahme 5 für ein Rührgefäß 6 auf. Des weiterem ist in diesem Bereich 3 ein Antriebsmotor 7 koaxial der Aufnahme 5 zugeordnet, über welchen mittels einer Antriebswelle 8 ein in dem Rührgefäß 6 angeordnetes Rührwerk 9 in Betrieb gesetzt werden kann.

Das Rührgefäß 6 ist mit einem, in eingesetztem Zustand dem Bediener- und Elektronikbereich 4 abgewandten Handgriff 10 versehen. Des weiteren weist das Rührgefäß 6 einen Deckel 11 auf, welcher beispielsweise mittels einer Klammerung oder dergleichen an dem Rührgefäß 6 gehalten ist.

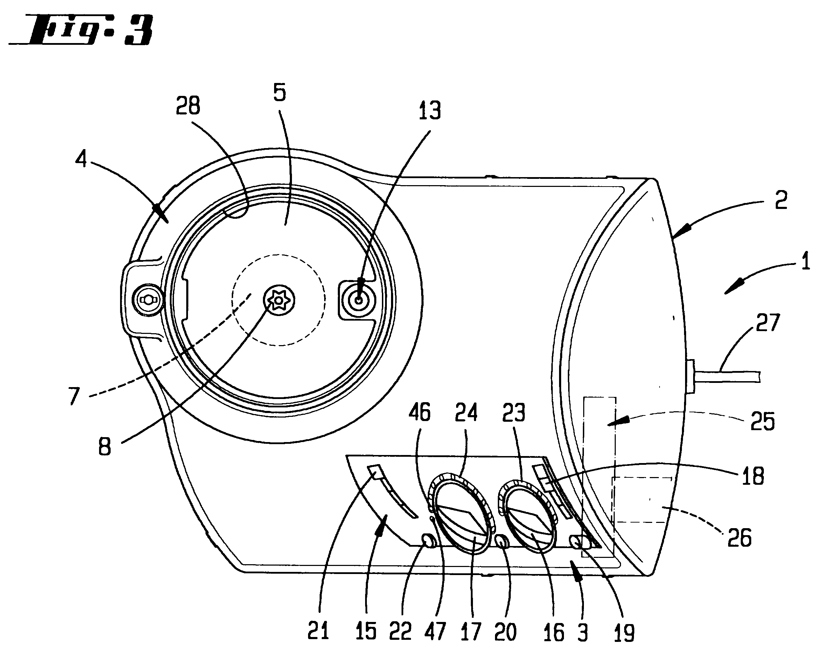

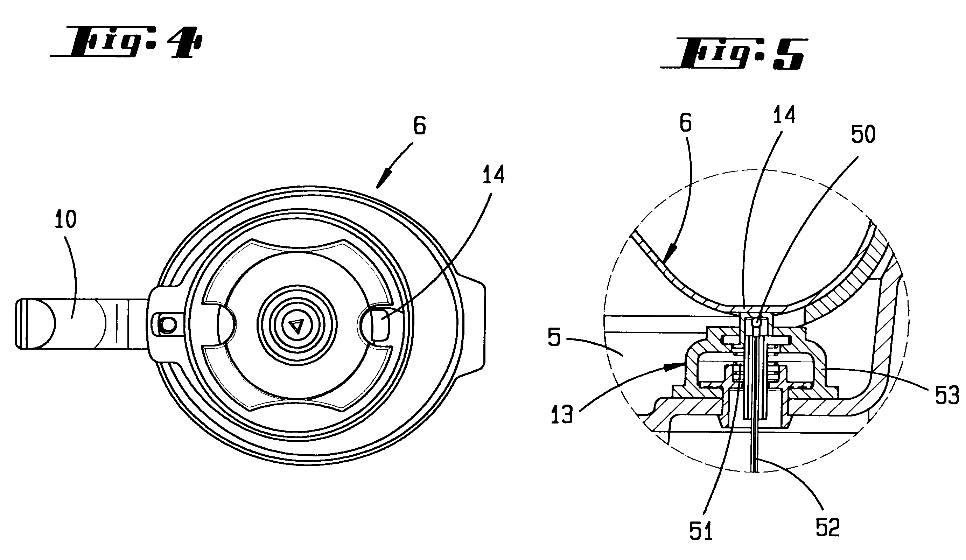

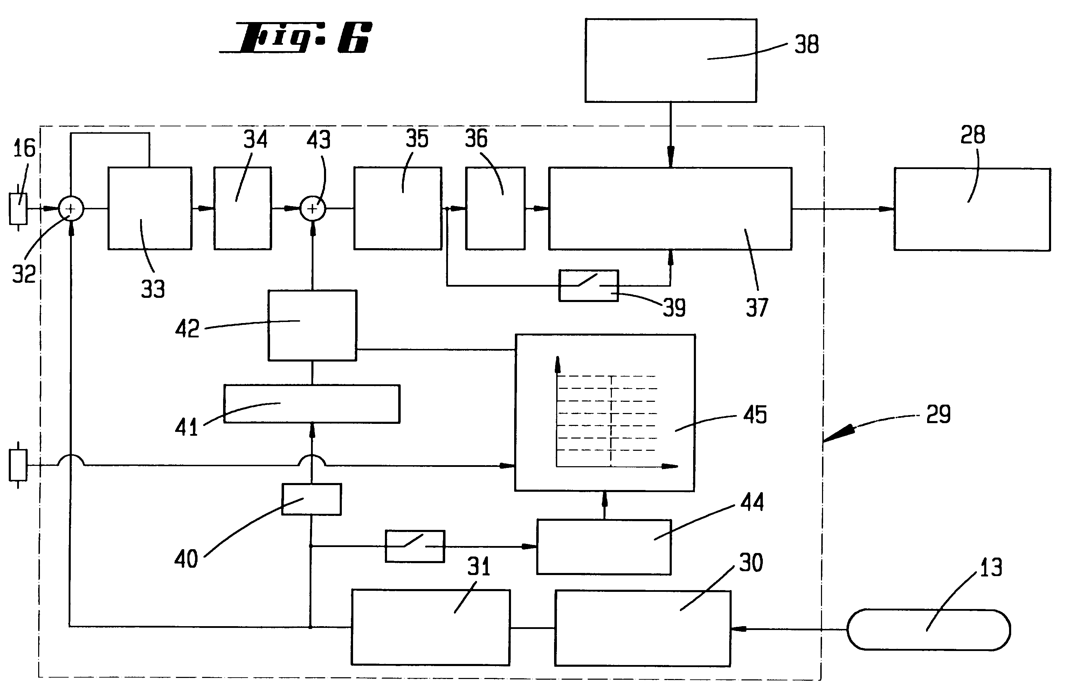

Das mit Stellfüßen 12 versehene Gehäuse 2 besitzt im Bodenbereich der Aufnahme 5 einen Temperatursensor 13, welcher bei in die Aufnahme 5 eingesetztem Rührgefäß gegen den Topfboden 14 tritt. Der Temperatursensor 13 besitzt im wesentlichen einen abgedeckten Sensorkopf 50, welcher mittels einer Druckfeder 51 stets in Richtung auf den Topfboden 14, d.h. vertikal nach oben, belastet ist. Sowohl der mit einem elektrischen Anschluß 52 versehene Sensorkopf 50 als auch die Druckfeder 51 sind in einem Gehäuse 53 aufgenommen, welches im Bodenbereich der Aufnahme 5 befestigt ist (siehe Figur 5).

In dem Bediener- und Elektronikbereich 4 ist in der dem Rührgefäß 6 zugewandten Fläche der Gehäusewandung ein Bedienerdisplay 15 vorgesehen. Letzteres beinhaltet einen Drehschalter 16 für eine Temperaturvorwahl, einen weiteren Drehschalter 17 zur Vorwahl einer Drehzahl des Rührwerkes 9, eine elektronische Uhr 18 mit einem zur Einstellung dieser Uhr 18 dienenden Drehschalter 19, eine Taste 20 zur Erzielung einer Turboschaltung und eine elektronische Gewichtsanzeige 21 mit einer dieser Anzeige zugeordneten Reset-Taste 22. Die Drehschalter 16 und 17 zur Temperatur- bzw. Drehzahleinstellung sind jeweils mittels einer LED-Anzeige 23, 24 beleuchtet, wobei jede Anzeige 23, 24 Einstellpunkte aufweist.

Weiterhin ist in dem Bediener- und Elektronikbereich 4 die Steuerelektronik für die Küchenmaschine 1 angeordnet. Diese ist in den gezeigten Figuren in Form einer Box 25 schematisch dargestellt.

An dem rückwärtigem Gehäusebereich ist ein Sammelstekker 26 vorgesehen, in welchem Abfrageschleifen bezüglich elektrischer und/oder mechanischer Komponenten zusammengeführt sind. Dieser Sammelstecker 26 ist ebenfalls schematisch dargestellt.

Der Elektrokabelanschluß zur Versorgung der Küchenmaschine 1 ist mit der Ziffer 27 bezeichnet.

Der untere Bereich des Rührgefäßes 6 ist im Bereich der Aufnahme 5 des Gehäuses 2 aufheizbar. Hierzu besitzt die Küchenmaschine 1 im Bereich der Aufnahme 5 eine elektrische Widerstandsheizung 28, welche den unteren Bereich des Rührtopfes 6 umschließt.

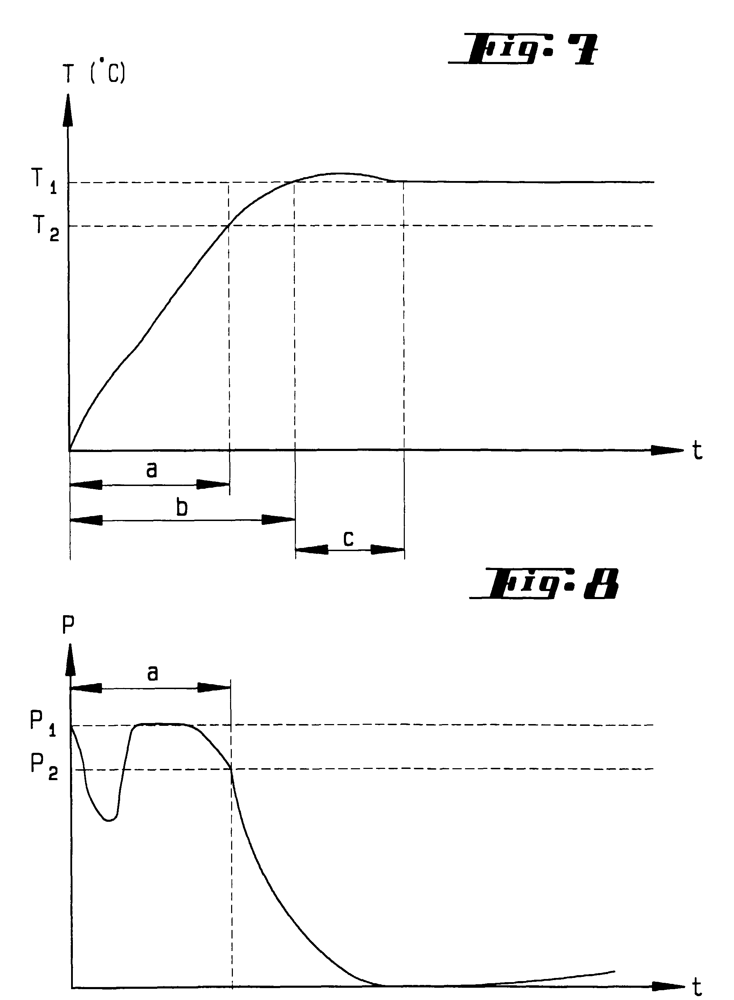

In Figur 6 ist ein Blockschaltbild der Steuerung der Widerstandsheizung 28 gezeigt. Die gewünschte Temperatur wird über den Drehschalter 16, welcher als lineares Potentiometer ausgebildet ist, eingestellt und als Spannungswert über einen Analog/Digital-Wandler dem Regelkreis 29 als Soll-Wert zugeführt. Der Temperatursensor 13 mißt die aktuelle Temperatur am Topfboden 14 und meldet nach Durchlauf eines Linearisierungs-Moduls 30 den ermittelten Ist-Wert dem Regelkreis 29. Da die aktuelle Temperatur am Gefäßboden ermittelt wird, erfolgt hiernach eine Korrektur des ermittelten Wertes in einem Temperaturkompensations-Modul 31, in welchem ein Faktor, entsprechend den Wärmeübergangszahlen, aufgerechnet wird. Der so korrigierte Ist-Wert entspricht somit der eigentlich wesentlichen Rührguttemperatur. Dieser Ist-Wert wird dem Soll-Wert in einem Vergleicher 32, beispielsweise einem Differentialverstärker, gegenübergestellt. Die Heizung wird sollwertabhängig angesteuert, wobei bei Vorgaben von 40°C bis 60°C mit geringerer Energie als bei Vorgaben von mehr als 60°C angesteuert wird. So ist ein Proportionalitätsmodul 33 vorgesehen, in welchem je nach Vorgabe des Soll-Wertes Proportionalitätsfaktoren gewählt werden. Bevorzugt werden hierbei Faktoren, welche bei Vorgaben von 40°C bis 60°C einem Wert von 1,6 und bei Vorgaben von mehr als 60°C einem Wert von 2,8 entsprechen. Diesem Proportionalitätsmodul 33 ist ein Sicherungs-Modul 34 nachgeschaltet, welches sicherstellt, daß eine Temperatur von 100°C nicht überschritten wird.

Von diesem Sicherungs-Modul 34 ausgehend werden die ermittelten Daten über ein weiteres Proportionalitätsmodul 35 und einen Filter 36 an ein Steuermodul 37 weitergeleitet. Auf dieses Steuermodul 37 wirkt ein Generator 38, bevorzugt ein Sägezahn-Generator, welcher in einem 15-Sekunden-Takt arbeitet. Hierdurch wird in dem Steuermodul 37 ein entsprechend 15 Sekunden lang andauerndes Steuerungsfenster geöffnet, in welchem eine Steuerung der Leistungsaufnahme der Widerstandsheizung 28 erfolgt. Hierzu ist ein Taktgeber 39 vorgesehen, welcher die Daten zwischen dem zweiten Proportionalitätsmodul 35 und dem Filter 36 abgreift und in einem Sekundentakt in das Steuermodul 37 einfließen läßt.

Ist beispielsweise eine hohe Heizleistung bzw. eine große Energie erforderlich, so wird innerhalb des 15 Sekunden andauernden Fensters des Steuermoduls 37 beispielsweise ein 12 Sekunden andauerndes, hohes Signal geliefert. Über die restlichen drei Sekunden erfolgt entsprechend ein niedriges Signal. Diese Signale entsprechen beispielsweise der Höhe der an der Widerstandsheizung 28 anliegenden Spannung. Ist jedoch eine niedrigere Energie erforderlich, so wird z.B. innerhalb des 15-Sekunden-Fensters ein lediglich 5 Sekunden andauerndes hohes Signal geliefert, mit nachfolgendem 10 Sekunden andauerndem niedrigerem Signal. Es ist auch denkbar, innerhalb des gesetzten Fensters die Widerstandsheizung 28 gänzlich an- bzw. auszuschalten. Die Leistungsaufnahme der Widerstandsheizung 28 ist somit in einem Zeitintervall von 15 Sekunden geregelt, wobei innerhalb dieser 15 Sekunden Zeitspannen von hohen und niedrigen Signalen vorgesehen sind.

Die Regelung der Heizleistung wird weiterhin von der Temperaturanstiegsgeschwindigkeit beeinflußt. Hierzu werden die ermittelten Ist-Werte nach dem Temperaturkompensations-Modul 31 abgegriffen und, nach Durchlauf eines Filters 40, an ein Temperaturanstiegsgeschwindigkeits-Modul 41 weitergeleitet. Die hier ermittelten Werte werden über eine Koppelstelle 42 zu einem zwischen dem Sicherungs-Modul 34 und dem zweiten Proportionalität-Modul 35 angeordneten Vergleicher 43, beispielsweise in Form eines Differentialverstärkers, geführt. Letzterer ermittelt nunmehr den an das Steuermodul 37 zu leitenden Wert aus den Werten des ersten Proportionalitäts-Moduls 33 und der Koppelstelle 42.

Weiter beeinflußt auch eine Füllmengenermittlung die Steuerung der Heizleistung. Hierzu ist ein Zweig vorgesehen, welcher ebenfalls die Daten nach dem Temperaturkompensations-Modul 31 abgreift und, nach Ablauf einer vorgegebenen Zeit nach Einschalten des Rührwerkes 9, beispielsweise 2 Minuten, dieses Signal auf ein Füllmengenermittlungs-Modul 44 schaltet. Das Ergebnis der Füllmengenermittlung wird in einer Auswerteinheit 45 in Relation zu der voreingestellten Drehzahl des Rührwerkes 9, welches über den Drehschalter 17 einstellbar ist, gesetzt.

In dem Füllmengenermittlungs-Modul 44 wird das Verhältnis von zugeführter Heizenergie zur Temperatursteigerung ermittelt, was einen Rückschluß auf die Füllmenge zuläßt. Da jedoch bei unterschiedlichen Drehzahlen des Rührwerkes 9 unterschiedliche Wärmeübergangswiderstände gegeben sind, ist eine korrigierte Füllmengenermittlung erforderlich. Diese erfolgt in der bereits erwähnten Auswerteinheit 45. Hier wird die ursprünglich ermittelte Füllmenge aus dem Füllmengenermittlungs-Modul 44 in Relation zu der voreingestellten Drehzahl des Rührwerkes 9 gesetzt. Der somit ermittelte Wert wird mit dem Inhalt eines Kennlinienfeldes verglichen. Der Inhalt des Kennlinienfeldes basiert auf empirisch ermittelten Meßwerten, welche bei verschiedenen Füllungen mit unterschiedlichen Temperaturanstiegswerten und Drehzahlen ermittelt wurden. Die empirisch ermittelten Werte sind in einem nicht flüchtigen Speicher gesichert.

Die aus der Auswerteinheit 45 resultierende, korrigierte Füllmenge wird als Wert an die bereits erwähnte Koppelstelle 42 weitergeleitet, wo eine Verknüpfung dieser Werte mit den Temperaturanstiegsgeschwindigkeitswerten erfolgt.

Die Steuerung der Widerstandheizung 28 erfolgt somit neben dem üblichen Soll-/Ist-Wertevergleich durch die Ermittlung der Temperaturanstiegsgeschwindigkeit und der Füllmenge. Die Steuerung ist so ausgelegt, daß unabhängig von Wärmeleitwert und Menge des aufzuheizenden Rührgutes in dem Rührgefäß 6 eine vergleichmäßigte Aufheizung erfolgt.

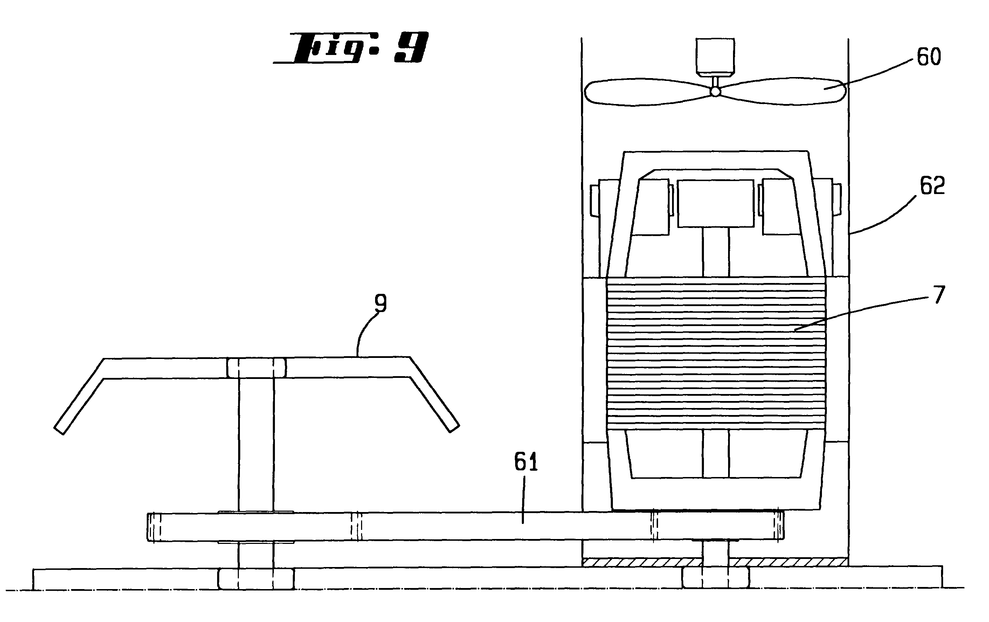

In Figur 7 ist an einem Beispiel eine Temperaturanstiegskurve gezeigt. Figur 8 hingegen zeigt die Linie der Leistungsaufnahme bei gleicher Zeiteinheit wie bei der Temperaturkennlinie auf.

In Figur 7 ist mit T1 die voreingestellte Maximal-Temperatur gekennzeichnet. P1 bezeichnet in Figur 8 die maximale Leistungsaufnahme.

Wie in den beiden Figuren 7 und 8 zu erkennen, wird bei einem Einschalten der Widerstandsheizung 28 zunächst die Leistungsaufnahme auf ein Maximum geregelt. Um einen stets gleichmäßigen Temperaturanstieg, wie in Figur 7 dargestellt, zu erzielen, wird kurzzeitig die Leistung heruntergeregelt, um hiernach wiederum bis zu einem Maximum P1 gesteuert zu werden. Erreicht die Temperatur eine etwas unterhalb der voreingestellten Temperatur liegende Schwelltemperatur T2, so erfolgt hiernach eine gleichmäßige Minderung der Leistungsaufnahme. Bevor jedoch die Temperatur nach einem Zeitabschnitt a diesen Schwellwert T2 erreicht, erfolgt bereits eine Verminderung der Leistung von der Maximalleistung P1 auf eine Schwellwertleistung P2.

Nach Durchlauf dieses Zeitabschnittes a und dem danach erfolgenden gleichmäßigen Herabfahren der Leistung steigt die Temperatur weiterhin an, bis diese die maximal voreingestellte Temperatur erreicht, dies nach Ablauf eines Zeitabschnittes b, wobei sogar über einen nachfolgenden Zeitabschnitt c ein Überschwingen über die voreingestellte Temperatur erfolgen kann. Nach Ablauf dieses nachfolgenden Zeitabschnittes c bleibt die Temperatur konstant auf der voreingestellten Höhe.

Mittels des Drehschalters 17 für die Drehzahl des Rührwerkes 9 ist eine Rührwerk-Einstellung wählbar, welche eine Teigrührschaltung in Betrieb setzt. Zur Erlangung dieser Rührwerk-Einstellung wird der Drehschalter 17 von einer Null-Stellung 46 entgegen dem Uhrzeigersinn in eine Teigrührstellung 47 verdreht. In dieser Teigrührstellung sind Rührphasen durch regelmäßige Stillstände unterbrochen. Letztere erstrecken sich im Vergleich zu den Rührphasen etwa über eine dreifache Zeitspanne, wobei bevorzugt eine Ruhephase von 4,5 Sekunden im Vergleich zu einer Rührphase von 1,5 Sekunden voreingestellt ist. Vorteilhaft an dieser Teigrührschaltung ist, daß sich in den Rührphasen der zu rührende Teig wieder setzen kann. Die Schaltung ist auch dahingehend vorteilhaft, daß sie zur Motorkühlung genutzt werden kann. In der Rührphase lassen sich daher kurzfristig sehr hohe Umdrehungszahlen realisieren.

In der Teigrührschaltung wird die an sich aus der Leistungsaufnahme ergebende maximale Drehzahl von ca. 11.500 U/min bedingt durch den Rührgutwiderstand auf ein Drittel oder weniger reduziert. Hierbei stellen sich Drehzahlen zwischen 100 bis 3.000, im Mittel 500 U/min ein. Die Ruhephasen werden genutzt zur aktiven Kühlung des Antriebsmotors 7 mittels eines in einer Luftführung 62 angeordneten, separaten Kühllüfters 60 (vgl. Fig. 9). Der Antriebsmotor 7 ist als stehender Universalmotor (Reihenschlußmotor) ausgebildet und ebenfalls im Bereich der Luftführung 62 positioniert. Dieser treibt über einen Riemen 61 das Rührwerk 9 an. Der Motor wird mit Netzspannung versorgt und über einen Triac angesteuert. Bedingt durch die hohen Belastungen in der Teigrührstellung, bspw. bei einer Hefeteigzubereitung, steigt die Motortemperatur aufgrund der erhöhten Verluste in den Kupferwicklungen über den vorgeschriebenen Grenzwert hinaus an. Der Motor ist hierbei so ausgelegt, daß bei der für den Einsatz des Gerätes maximal vorgesehenen Belastung eine ausreichende Drehbewegung (Umwälzung bei Herstellung von Teig) gewährleistet ist. Der externe Kühllüfter 60 erzeugt während dieser Betriebsart die maximale Luftleistung, die jedoch allein nicht ausreicht um den Antriebsmotor 7 unter den für den Einsatz vorgeschriebenen Grenzwert der Temperatur herabzukühlen. Hierzu wird der Antriebsmotor 7, wie bereits erwähnt, nur mit Impulsen angesteuert, wobei die volle Netzspannung geschaltet wird und sich eine der Belastung entsprechende Drehzahl einstellt. Die Dauer (Pulsbreite) des Ansteuerimpulses ist dabei derart ausreichend ausgelegt, daß bei der für den Einsatz des Gerätes maximal vorgesehenen Belastung die notwendige Arbeit verrichtet wird. Das Verhältnis der Pulsbreite des Ansteuerimpulses für den Motor zur jeweils nachfolgenden Aus-Zeit ist so festgelegt, daß bei maximaler Luftleistung des externen Kühllüfters 60 und bei der maximal vorgesehenen Belastung für eine bestimmte Dauer die für den Einsatz des Gerätes vorgeschriebene Grenztemperatur der Motorwicklungen nicht überschritten wird.

Aufgrund der Charakteristik des als Universalmotor ausgebildeten Antriebsmotors 7, läuft letzterer bei einem Impulsbetrieb mit jedem Einschaltvorgang mit dem maximal zur Verfügung stehenden Drehmoment aus dem Stillstand an und verursacht so einen für bestimmte Anwendungen nützlichen Losreißeffekt. Dies bspw. bei der Herstellung von Hefeteig, wobei bei jedem Einschaltvorgang ein Losrütteln von Teigbestandteilen zu einer Verbesserung der Rückführung des Teiggemisches in den Arbeitsbereich des Knetwerkzeuges im Rührgefäß 6 erreicht wird.

Der in der Figur 9 schematisch dargestellte Kühllüfter 60 wird über einen eigenen, nicht dargestellten Elektromotor angetrieben.

Um von der Teigrührschaltung in die normale Rührschaltung, bzw. umgekehrt, zu gelangen, ist stets ein Überlaufen der Null-Stellung 46 erforderlich.

Mittels der Taste 20 im Bedienerdisplay 15 ist eine Turbofunktion schaltbar, bei welcher kurzfristig sehr hohe Drehzahlen des Rührwerkes 9 erzielt werden können.

Bei einer Grund- bzw. Normallast, wie sie bei den überwiegenden Geräteanwendungen zum Einsatz kommt, wird der Antriebsmotor 7 innerhalb seiner Kennlinie durch Phasenanschnitt auf die geforderten Drehzahlen geregelt. Für die notwendige Kühlung sorgt der externe Kühllüfter 60, wobei die Luftleistung der Wärmeentwicklung im Antriebsmotor 7, gemessen von einem nicht dargestellten Temperaturfühler im Antriebsmotor 7, durch elektronische Regelung angepaßt wird.

Sowohl die Teigrührschaltung als auch die Turboschaltung sind nur aktivierbar, wenn die Aufheiztemperatur unterhalb einer bestimmten Grenztemperatur voreingestellt ist. Bevorzugt wird hierbei eine Grenztemperatur von 70°C. Dies hat insbesondere den Hintergrund, daß bei Temperaturen von mehr als 70°C bereits örtlich Siedeerscheinungen auftreten können, die durch die Rührfunktion verstärkt werden. Dies kann bei sehr hohen Drehzahlen, welche sowohl bei der Teigrührschaltung als auch bei der Turboschaltung auftreten können, dazu führen, daß sich ein sehr starker Druck aufbaut und der Deckel des Rührgefäßes abgehoben wird.

Weiterhin bewirkt eine Elektronik, daß abhängig von einer voreingestellten Drehzahl des Rührwerkes 9 ein Hochfahren des Rührwerkes 9 auf diese Drehzahl zunächst langsam und dann schneller erfolgt. Hierzu ist vorgesehen, daß bei einer voreingestellten Drehzahl von bis zu etwa 1000 Umdrehungen pro Minute immer ein langsames Anfahren erfolgt. Bei größeren eingestellten Drehzahlen, oberhalb etwa 1000 Umdrehungen pro Minute erfolgt ein ruckartiges Anfahren. Ist jedoch die Heiztemperatur auf größer als 70°C eingestellt, so erfolgt auch bei einer Einstellung einer Umdrehungszahl von mehr als 1.000 U/min ein langsames Anfahren und die Drehzahl überschreitet gleichwohl nicht die 1.000 U/min. Die Drehzahlveränderung bei normalem Betrieb, d.h. bei konstanter Drehzahl des Rührwerkes, erfolgt ohne Getriebe. Die Veränderung der Drehzahl wird mittels einer Steuerung über den Phasenanschnittswinkel vorgenommen.

Hohe Drehzahlen von mehr als 1.000 U/min werden bei den meisten Anwendungen zum Zerkleinern des Topfinhaltes eingestellt. Man benötigt hierbei das maximale Drehmoment des Antriebsmotors 7, um beim Anlaufen ein Verkeilen des Mixwerkzeuges in dem Medium zu vermeiden. Der zur Verfügung stehende Antriebsmotor 7 kann das maximale Moment nur bei maximaler Versorgungsspannung aufbringen, d. h. ohne Phasenanschnitt starten und dann auf die Soll-Drehzahl regeln. Niedrige Drehzahlen von weniger als 1.000 U/min werden überwiegend im Kochbetrieb zum Rühren verwendet. Hier muß ein Zerkleinern des Topfinhaltes vermieden werden, in dem der Antriebsmotor 7 mit geringer Versorgungsspannung (maximaler Phasenanschnitt) gestartet und dann auf die Soll-Drehzahl geregelt wird.

Die Drehzahlregelung wird über einen Mikroprozessor programmtechnisch realisiert. Die Sollwertvorgabe erfolgt stufenlos über den bereits erwähnten Drehschalter 17, welcher als Potentiometer ausgebildet ist. Die Rückmeldung über den jeweiligen Ist-Wert erfolgt durch einen Sensor, der die Drehbewegungen des Antriebsmotors 7 an der Motorwelle abgreift. Die Auslegung der den Regelkreis bestimmenden Komponenten ist dabei so geartet, daß ein Regelbereich von mindestens 1:100 erreicht ist, d. h. Drehzahlen von z. B. 100 bis ca. 10.000 U/min am Mixwerkzeug.

Die erwähnten Schalter 16 und 17 zur Voreinstellung von Temperatur und Drehzahl sind, wie bereits erwähnt, mittels LED-Anzeigen 23, 24 beleuchtet. Diese Beleuchtungen haben für den Benutzer Signalwirkung, da bei höheren Einstellwerten eine Beleuchtung anderer Farbe und/oder Intensität zugeordnet ist als bei niedrigeren Einstellwerten. Hier ist insbesondere vorgesehen, daß die LED-Anzeigen 23, 24 zweifarbig ausgebildet sind, wobei ein gelber Bereich den niedrigeren Einstellwerten und ein roter den höheren Einstellwerten zugeordnet ist. Während bei den niedrigeren Einstellbereichen die gelben LED's stark aktiviert sind, die roten dagegen nur schwach, erfolgt mit zunehmend höheren Einstellungen eine Abschwächung der Aktivierung der gelben und eine Verstärkung der Aktivierung der roten LED's.

Licht emittierende Komponenten wie z. B. LED's speisen Licht von entgegengesetzten Richtungen in einen Lichtleiter ein. Der Lichtleiter ist dabei so ausgelegt, daß Licht senkrecht zur Richtung der Einspeisung abgestrahlt wird und so der Effekt eines Lichtbalkens entsteht. Je nach Ansteuerung der Einspeisekomponenten (LED's) kann so entweder die Intensität von einer Seite des Lichtbalkens zur anderen verlagert werden und erhöht werden (bei gleichfarbigen Einspeisekomponenten) oder bei farbig unterschiedlichen Einspeisekomponenten ein Effekt fließender Veränderung von der Farbe der einen Einspeisekomponente über Mischlicht bis hin zur Farbe der anderen Einspeisekomponente erzielt werden.

Für die Drehzahl kann bei zweifach einfarbiger Einspeisung einer niedrigeren Drehzahl eine entsprechende Intensität zugeordnet und angezeigt und bei Erhöhung der Drehzahleinstellung die Intensität zum anderen Ende des Lichtbalkens hin verlagert oder erhöht werden.

Die in dem Bedienerdisplay 15 angeordnete elektrische Uhr 18 weist einen Drehschalter 19 auf, zur Vorwahl einer Heizzeit und/oder einer Rührzeit. Die Einstellung der Uhr 18 erfolgt hierbei in einfachster Weise, indem durch eine hohe Drehgeschwindigkeit des Drehschalters 19 über einen bestimmten Drehwinkel eine große Zeiteinheit, beispielsweise eine Minute, und durch eine niedrigere Drehgeschwindigkeit des Drehschalters 19 über denselben Drehwinkel eine niedrige Zeiteinheit, beispielweise eine Sekunde, zuordbar ist. Dies bedeutet, daß über den Drehschalter 19 sowohl eine Verstellung in kleinen wie auch in großen Schritten möglich ist, ohne jeweils den gesamten Einstellbereich durchfahren zu müssen.

Der am rückwärtigen Bereich des Gehäuses 2 angeordnete Sammelstecker 26 ist als Schnittstelle ausgebildet. In diesem können bezüglich der elektrischen/elektronischen und/oder mechanischen Komponenten Abfrageschleifen zusammengeführt sein. Beispielsweise können über diesen Sammelstecker 26 Funktionsausfälle in den Hauptkomponenten, wie Motor 7 und Heizung 28, oder in anderen elektrischen Elementen erfaßt werden. Weiterhin auch eventuelle Fehlermeldungen. So z.B. auch Spannungsabfälle in den Motorwicklungen oder in den elektronischen Elementen, womit eine gezielte Fehlersuche realisiert ist.

Ebenfalls ist es möglich, über diese Schnittstelle nach der Gerätefertigung gerätespezifische Werte einzustellen bzw. zu kalibrieren. Auf diese Weise kann auf aufwendige elektrische/mechanische Justiervorgänge und entsprechende elektrische/mechanische Bauelemente verzichtet werden. Die jeweiligen, gerätespezifischen Werte werden dabei in einem nicht flüchtigen Speicher (EEPROM) in der Elektronik der Küchenmaschine 1 gespeichert und können im Servicefall geändert werden.

Hierzu kann ein Teil der Kalibrierschaltung bzgl. jeder Abfrageschleife einer elektrischen/elektronischen Komponente der Küchenmaschine 1 in einem herausnehmbaren und steckbaren Gehäuseteil ausgebildet sein. Vorteilhafterweise ist ein derartiges Gehäuseteil hinsichtlich der Kalibrierungswerte programmierbar und als Dongle ausgebildet.

Mit Hilfe dieses werkseitig programmierbaren Dongles können die Hauptkomponenten der Küchenmaschine 1 kalibriert werden, wobei die Werte in einem nicht flüchtigen Speicher (EEPROM) abgelegt werden. Bspw. können hier nach neuesten Erkenntnissen ermittelte empirische Meßwerte für das Kennlinienfeld der Rührwerkdrehzahlen eingespeist werden.

Eine Kalibrierung kann derart erfolgen, daß der Dongle auf den Sammelstecker 26 bzw. der Schnittstelle gesetzt wird und hiernach die Küchenmaschine 1 eingeschaltet wird. Das Zeit-Display 18 zeigt den jeweiligen Kalibrierungsschritt an, wobei bevorzugt zehn Schritte durchgeführt werden. Das Waagen-Display 21 zeigt in den verschiedenen Kalibrierungsschritten die einzustellenden Kenndaten an, wie bspw. bei der Tarierung der Waage einen Punkt. Nach Einschalten der Küchenmaschine 1 zur Kalibrierung zeigt das Waagen-Display 21 zunächst die Versionsnummer des Dongles an. Ist die Küchenmaschine 1 bereits zu einem früheren Zeitpunkt mit einer älteren Dongle-Version kalibriert worden, so blinkt die Versionsnummer in dem Waagen-Display 21. Nach Abschluß eines jeden Kalibrierungs-Schrittes wird die Reset-Taste 22 gedrückt, um in den nächsten Kalibrierungs-Schritt zu gelangen.

Der Sammelstecker 26 kann auch als Schnittstelle für einen Computer ausgebildet sein. Die über die Abfrageschleifen ermittelten Werte können somit von einem Computer erfaßt und ausgewertet werden. Hier sind beispielsweise die Ist- und Soll-Temperaturen, sowie die Ist- und Soll-Drehzahlen, das Resultat der Füllmengenermittlung und eventuelle Resultate einer Waageneinrichtung zu nen- nen. Aufgrund dieser ermittelten und per Computer erfaßten Daten können auch mit im Computer abgespeicherten Soll-Daten Vergleiche gezogen werden, wonach dem Benutzer durch den Computer eventuelle Fehlbedienungen, wie beispielsweise zu hoch eingestellte Temperatur oder Drehzahl, mitgeteilt werden können.

Es ist auch denkbar, die Schnittstelle, bzw. den Sammelstecker 26, zu einem computerunterstützten Betrieb der Küchenmaschine 1 zu nutzen. Hier kann beispielsweise nach Einfüllen von vorbestimmten Zutaten in das Rührgefäß 6 der Computer die Drehzahl des Rührwerkes 9, die Temperatur der Widerstandsheizung 28 und die Dauer des Rührens bzw. des Aufheizens bestimmen, regeln und kontrollieren.

## Patentansprüche

1. Küchenmaschine (1) mit einem Rührgefäß (6) und einem Antrieb (7) für ein Rührwerk (9) in dem Rührgefäß (6), wobei das Rührgefäß (6) in seinem unteren Bereich durch eine Heizung (28) aufheizbar ist, dadurch gekennzeichnet, daß die Aufheizung in Abhängigkeit einer Temperaturanstiegsgeschwindigkeit vorgenommen wird, und daß die Leistungsaufnahme der Heizung (28) in Abhängigkeit der Temperaturanstiegsgeschwindigkeit regelbar ist.

2. Küchenmaschine nach Anspruch 1, dadurch gekennzeichnet, daß die Aufheizung in Abhängigkeit einer Füllmengenermittlung durchgeführt wird.

3. Küchenmaschine nach Anspruch 2, dadurch gekennzeichnet, daß die Füllmengenermittlung durch Vergleich der Temperaturanstiegsgeschwindigkeit bei einer bestimmten Heizleistung mit empirisch bei verschiedenen Füllungen ermittelten Temperaturanstiegswerten durchgeführt wird.

4. Küchenmaschine nach einem oder mehreren der vorhergehenden Ansprüche 2 oder 3, dadurch gekennzeichnet, daß die Füllmengenermittlung weiter in Abhängigkeit der gewählten Drehzahl des Rührwerkes (9) durchgeführt wird.

5. Küchenmaschine nach einem oder mehreren der vorhergehenden Ansprüche, dadurch gekennzeichnet, daß ein nicht flüchtiger Speicher vorgesehen ist, in welchem die empirisch ermittelten Werte gespeichert sind.

6. Küchenmaschine nach einem oder mehreren der vorhergehenden Ansprüche, dadurch gekennzeichnet, daß Proportionalitätsfaktoren, welche die Aufheizung steuern, je nach gewünschter Endtemperatur unterschiedlich gewählt sind.

7. Küchenmaschine nach einem oder mehreren der vorhergehenden Ansprüche, dadurch gekennzeichnet, daß die Aufheizung durch eine elektrische Widerstandsheizung (28) erfolgt und daß die hierfür erforderliche Energieaufnahme jeweils in einem der Leistung angepaßten Zeitintervall von beispielsweise 15 Sekunden geregelt ist.

8. Küchenmaschine nach einem oder mehreren der vorhergehenden Ansprüche, dadurch gekennzeichnet, daß eine Rührwerk-Einstellung, Z.B. Teigrührschaltung, vorgesehen ist, in welcher Rührphasen durch regelmäßige Stillstände unterbrochen sind.

9. Küchenmaschine nach Anspruch 8, dadurch gekennzeichnet, daß unter Nutzung eines Rührgutwiderstandes bei einer Reduzierung der sich an sich aus der Leistungsaufnahme ergebenden maximalen Drehzahl auf ein Drittel oder weniger Ruhepausen zwischengeschaltet sind und daß die Ruhepausen zur aktiven Kühlung eines Antriebsmotors (7) genutzt sind.

10. Küchenmaschine nach einem oder mehreren der Ansprüche 8 bis 9, dadurch gekennzeichnet, daß die Stillstände sich im Vergleich zu den Rührphasen etwa über eine dreifache Zeitspanne erstrecken.

11. Küchenmaschine nach einem oder mehreren der Ansprüche 8 bis 10, dadurch gekennzeichnet, daß die Teigrührschaltung nur aktivierbar ist, wenn die Aufheiztemperatur unterhalb einer bestimmten Grenztemperatur, beispielsweise 70° C voreingestellt ist.

12. Küchenmaschine nach einem oder mehreren der Ansprüche 8 bis 11, dadurch gekennzeichnet, daß abhängig von einer voreingestellten Drehzahl des Rührwerkes (9) ein Hochfahren des Rührwerkes (9) auf diese Drehzahl zunächst langsam und dann schneller erfolgt.

13. Küchenmaschine nach einem oder mehreren der vorhergehenden Ansprüche, dadurch gekennzeichnet, daß die Drehzahlvorwahl und/oder die Temperaturvorwahl über beleuchtete Schalter (16, 17), beispielsweise Dreh- oder Schiebeschalter erfolgt und daß höheren Einstellwerten eine Beleuchtung anderer Farbe und/oder Intensität zugeordnet ist als niedrigeren Einstellwerten.

14. Küchenmaschine nach einem oder mehreren der vorhergehenden Ansprüche, dadurch gekennzeichnet, daß die Drehzahlvorwahl und/oder die Temperaturvorwahl über beleuchtete Schalter (16, 17), beispielsweise Dreh- oder Schiebeschalter, erfolgt und daß höheren Einstellwerten eine Beleuchtung anderer Intensität zugeordnet ist als niedrigeren Einstellwerten, und daß eine Intensitätsveränderbarkeit der Beleuchtung durch eine zweifach einfarbige Einspeisung in einen Lichtleiter gegeben ist.

15. Küchenmaschine nach einem oder mehreren der vorhergehenden Ansprüche, dadurch gekennzeichnet, daß bezüglich der elektrischen/elektronischen und/oder mechanischen Komponenten Abfrageschleifen vorgesehen sind, die zur Abfragung in einem Sammelstecker (26) zusammengeführt sind.

16. Küchenmaschine nach Anspruch 15, dadurch gekennzeichnet, daß ein Teil einer Kalibrierschaltung bezüglich jeder Abfrageschleife einer elektrischen/elektronischen Komponente der Küchenmaschine (1) in einem herausnehmbaren/steckbaren Gehäuseteil ausgebildet ist.

17. Küchenmaschine nach einem oder mehreren der Ansprüche 15 bis 16, dadurch gekennzeichnet, daß das Steckerteil hinsichtlich der Kalibrierungswerte programmierbar ist.

18. Küchenmaschine nach einem oder mehreren der Ansprüche 15 bis 17, dadurch gekennzeichnet, daß der Sammelstecker (26) als Schnittstelle für einen Computer ausgebildet ist.

19. Küchenmaschine nach einem oder mehreren der Ansprüche 15 bis 18, dadurch gekennzeichnet, daß die Komponenten über die Schnittstelle ansteuerbar sind, beispielsweise die Drehzahl des Rührwerkes (9) vorwählbar oder die Aufheiztemperatur der Heizung (28) einstellbar ist.

## Claims

1. A food processor (1) having a mixing vessel (6) and a drive (7) for an agitator (9) in the mixing vessel (6), in which the mixing vessel (6) can be heated-up in its lower region by a heater (28), characterised in that the heating-up is undertaken in dependence on the rate at which temperature rises, and in that the power input to the heater (28) can be controlled in dependence on the rate at which temperature rises.

2. A food processor according to Claim 1, characterised in that the heating-up is carried out in dependence on a level value.

3. A food processor according to Claim 2, characterised in that the level value is realised by comparison of the rate at which the temperature rises for a specified input of heat with empirically established values of temperature rise for different levels of filling.

4. A food processor according to one or more of the preceding Claims 2 or 3, characterised in that the level value is further realised in dependence on the selected speed of rotation of the agitator (9).

5. A food processor according to one or more of the preceding claims, characterised in that a non-dynamic memory is provided, in which the empirically established values are stored.

6. A food processor according to one or more of the preceding claims, characterised in that proportionality factors which control the heating-up are selected differently in each case according to the desired final temperature.

7. A food processor according to one or more of the preceding claims, characterised in that the heating-up is effected by an electrical resistance heater (28) and that the energy input required for this is controlled in each case in a time interval which is matched to the power and is for example of 15 seconds.

8. A food processor according to one or more of the preceding claims, characterised in that an agitator setting, for example a dough-stirring control, is provided in which stirring periods are interrupted by regular standstill periods.

9. A food processor according to Claim 8, characterised in that by use of a resistance for the product being stirred, in the case of a reduction of the maximum rotational speed, itself resulting from the power input, to one-third or less, stationary periods are interposed, and in that the stationary periods are used for active cooling of a drive motor (7).

10. A food processor according to one or more of Claims 8 to 9, characterised in that the standstill periods extend, in comparison to the stirring periods, to approximately more than three times the timespan.

11. A food processor according to one or more of Claims 8 to 10, characterised in that the dough-stirring control is only activatable when the heating-up temperature has been preset below a specified limiting temperature, for example 70°.

12. A food processor according to one or more of Claims 8 to 11, characterised in that in dependence on a preset speed of rotation of the agitator (9), running-up of the agitator (9) to this speed of rotation is effected initially slowly and then faster.

13. A food processor according to one or more of the preceding claims, characterised in that preselection of speed of rotation and/or preselection of temperature is effected by illuminated switches (16, 17), for example rotatable or push switches, and in that illumination with another colour and/or intensity is associated with higher setting values than lower setting values.

14. A food processor according to one or more of the preceding claims, characterised in that preselection of speed of rotation and/or preselection of temperature is effected by illuminated switches (16, 17), for example rotatable or push switches, and in that illumination with a different intensity is associated with higher setting values than lower setting values, and in that changeability in the intensity of the illumination is provided by a dual coloured feed in a light line.

15. A food processor according to one or more of the preceding claims, characterised in that interrogation loops are provided for the electric/electronic and/or mechanical components, which loops are brought together in a multiple plug for interrogation.

16. A food processor according to Claim 15, characterised in that a part of a calibration circuit for each interrogation loop of an electrical/electronic component of the food processor (1) is provided in a removable/insertable housing portion.

17. A food processor according to one or more of the preceding Claims 15 to 16, characterised in that the insertion portion is programmable in regard to calibration values.

18. A food processor according to one or more of Claims 15 to 17, characterised in that the multiple plug (26) is formed as an interface for a computer.

19. A food processor according to one or more of Claims 15 to 18, characterised in that the components are controllable by way of the interface, for example the speed of rotation of the agitator (9) can be preselected or the heating-up temperature of the heater (28) can be set.

## Revendications

1. Robot ménager (1) avec un récipient d'agitation (6) et un entraînement (7) pour un agitateur (9) monté dans le récipient d'agitation (6), le récipient à agitateur (6) pouvant être chauffé dans sa zone inférieure par un chauffage (28), caractérisé en ce que le chauffage est effectué en fonction d'une vitesse de montée en température et en ce que la consommation de puissance du chauffage (28) est susceptible d'être réglée en fonction de la vitesse de montée en température.

2. Robot ménager selon la revendication 1, caractérisé en ce que le chauffage est effectué en fonction de la détermination du degré de remplissage.

3. Robot ménager selon la revendication 2, caractérisé en ce que la détermination du degré de remplissage est effectuée par comparaison entre la vitesse de montée en température pour une puissance de chauffage déterminée à des valeurs de montée en température ayant été déterminées empiriquement pour différents degrés de remplissage.

4. Robot ménager selon l'une ou plusieurs des revendications 2 et 3 précédentes, caractérisé en ce que la détermination du degré de remplissage est en outre effectuée en fonction de la vitesse de rotation sélectionnée pour l'agitateur (9).

5. Robot ménager selon l'une ou plusieurs des revendications précédentes, caractérisé en ce qu'est prévue une mémoire non volatile, dans laquelle les valeurs déterminées de façon empirique sont stockées.

6. Robot ménager selon l'une ou plusieurs des revendications précédentes, caractérisé en ce que des facteurs de proportionnalité, qui commandent le chauffage, sont choisis différemment selon la température finale souhaitée.

7. Robot ménager selon l'une ou plusieurs des revendications précédentes, caractérisé en ce que le chauffage s'effectue par un chauffage électrique à résistance (28), et en ce que la consommation d'énergie nécessaire pour celui-ci est chaque fois régulée dans un intervalle de temps adapté à la puissance de, par exemple, 15 secondes.

8. Robot ménager selon l'une ou plusieurs des revendications précédentes, caractérisé en ce qu'un réglage de l'agitateur, par exemple un circuit d'agitation de pâte est prévu, dans lequel des phases d'agitation sont interrompues par des arrêts réguliers.

9. Robot ménager selon la revendication 8, caractérisé en ce qu'en utilisant une résistance du produit à agiter, en cas d'une réduction à un tiers ou moins de la vitesse de rotation maximale résultant de la consommation de puissance, quelques pauses de repos sont intercalées, et en ce que les pauses de repos sont utilisées pour assurer un refroidissement actif d'un moteur électrique (7).

10. Robot ménager selon l'une ou plusieurs des revendications 8 à 9, caractérisé en ce que les arrêts s'étendent à peu près sur un intervalle de temps triple en comparaison de la durée des phases d'agitation.

11. Robot ménager selon l'une ou plusieurs des revendications 8 à 10, caractérisé en ce que le circuit d'agitation de pâte n'est activable que lorsque la température de chauffage est préréglée au-dessous d'une température limite déterminée, par exemple de 70°.

12. Robot ménager selon l'une ou plusieurs des revendications 8 à 11, caractérisé en ce qu'une mise en vitesse de l'agitateur (9), à cette vitesse, d'abord lentement et ensuite plus rapidement, est effectuée en fonction d'une vitesse de rotation préréglée de l'agitateur (9).

13. Robot ménager selon l'une ou plusieurs des revendications précédentes, caractérisé en ce que la présélection de la vitesse de rotation et/ou la présélection de la température s'effectuent par l'intermédiaire d'interrupteurs (16, 17) éclairés, par exemple d'interrupteurs à rotation ou d'interrupteurs à coulissement, et en ce qu'à des valeurs de réglage supérieures est associée une illumination, d'une autre couleur et/ou intensité que pour les valeurs de réglage inférieures.

14. Robot ménager selon l'une ou plusieurs des revendications précédentes, caractérisé en ce que la présélection de la vitesse de rotation et/ou la présélection de la température s'effectue par l'intermédiaire d'interrupteurs (16, 17) éclairés, par exemple d'interrupteurs à rotation ou à coulissement, et en ce qu'à des valeurs de réglage supérieures est associé un éclairage d'une autre intensité que pour des valeurs de réglage inférieures, et en ce qu'une capacité de variation de l'intensité de l'éclairage est fournie par une injection, simple, d'une couleur dans un guide de lumière.

15. Robot ménager selon l'une ou plusieurs des revendications précédentes, caractérisé en ce que, concernant les composants électriques/électroniques et/ou mécaniques, sont prévues des boucles d'interrogation qui sont regroupées en une prise de collecte (26) pour effectuer l'interrogation.

16. Robot ménager selon la revendication 15, caractérisé en ce qu'une partie d'un circuit d'étalonnage est réalisé par rapport à chaque boucle d'interrogation d'un composant électrique/électronique de l'robot électroménager (1), dans une partie de boîtier extractible/enfichable.

17. Robot ménager selon l'une ou plusieurs des revendications 15 à 16, caractérisé en ce que la partie de prise enfichable est programmable quant aux valeurs d'étalonnage.

18. Robot ménager selon l'une ou plusieurs des revendications 15 à 17, caractérisé en ce que la prise à enfichage pour collecte (26) est réalisée sous la forme d'une interface pour un ordinateur.

19. Robot ménager selon l'une ou plusieurs des revendications 15 à 18, caractérisé en ce que les composants sont susceptibles d'être commandés par l'intermédiaire de l'interface, par exemple la vitesse de rotation de l'agitateur (9) est susceptible d'être présélectionnée, ou la température de chauffage, du chauffage (28), est susceptible d'être réglée.
